# EUROPEAN PATENT APPLICATION

(11) **EP 3 142 393 A1**
(43) Date of publication of application: **15.03.2017**
(21) Application number: 15185105.2
(22) Date of filing: 14.09.2015
(51) Int. Cl.: H04W 4/02, H04W 4/20, H04W 12/02

(54) **METHOD AND SYSTEM FOR OBTAINING DEMOGRAPHIC INFORMATION**

(71) Applicant: BASE Company, 1200 Brussel (BE)
(72) Inventor: Surewaard, Hendrikus Antonius Surewaard, 4844 AT Terheijden (NL); Bailliu, Tom, 8200 Sint-Andies (Brugge) (BE); Gjorgjievski, Blagojcho, 1200 Brussel (BE)
(74) Representative: De Clercq & Partners

(57) **Abstract**

The present invention pertains to a method for obtaining statistical demographic information of a sample of people present in a monitored area during a period of time, the method comprising: using a wireless receiver to intercept (110) messages transmitted by mobile handsets and/or base stations for mobile communications in said monitored area during said period of time; mapping (130) said intercepted messages to corresponding mobile operators on the basis of operator-specific information associated with said messages; and generating (140) estimates of respective numbers of unique subscribers of each of said mobile operators present in said monitored area during said period of time on the basis of the numbers of said intercepted messages. The invention also pertains to a corresponding computer program product, a corresponding system, and vehicles incorporating such system.

## Description

### Field of the Invention

The present invention pertains to methods and systems for obtaining statistical demographic information of a sample of people present in a monitored area during a period of time.

### Background

It is known to process data gathered from different wireless communication networks to generate marketing information on each distinct wireless communication network. US patent application publication no. 2003/064722 A1 to Tom Frangione et al. discloses a system and method for gathering data from wireless communication networks, the wireless communication network including a plurality of cell sites, mobile subscriber units, and a mobile telephone switching office. The data gathering system comprises a plurality of data gathering nodes and a control center. Each data gathering node comprises multiple receivers, with each receiver gathering data from a different wireless communication network. Stored data at the control center is processed to generate marketing information on each wireless communication network. The system of US 2003/064722 A1 is rather inefficient in that it uses encryption to generate anonymized subscriber identifiers from the MIN fields extracted from the captured messages.

US patent application publication no. 2013/0340095 A1 in the name of Skyhook Wireless Inc. discloses techniques for privacy preserving mobile demographic measurement of individuals, groups, and locations over time and space. A method of estimating demographic information associated with a user of a mobile device and/or a location while preserving the privacy of the user based at least in part on a location estimate of the mobile device of the user includes receiving an estimated geographical location of the mobile device of the user and receiving a time at which the mobile device was at the estimated geographical location. The method includes assigning substitute identifiers for the geographical location and the time at which the mobile device was at the estimated geographical location. The method includes associating the geographical areas substitute identifiers with demographic information and estimating demographic information associated with the user of the mobile device based on the substitute identifiers and based on the demographic information associated with substitute identifiers. Again, the extra steps to be taken to preserve privacy of the individual surveyed subscribers are cumbersome.

International patent application publication no. WO 2006/010774 A1 in the name of Sensus Analytics Ltd. discloses a system that records the movement of people carrying mobile devices within a specific area. A plurality of receivers distributed throughout the specified area monitor the area for wireless communication from a mobile device. Mobile devices are identified by way of a unique identifier, e.g. MAC address, or similar transmitted on a control channel or the like. Whenever such wireless communication is detected, the direction from which the signal is received is detected. The position of the mobile device (and hence the person carrying it) may be calculated by triangulating results from two or more receiving devices, and the results stored. The system thus specifically deals with movement tracking, and not with gathering demographics.

### Summary of the Invention

There is a need for a method for obtaining real-time statistical demographic information by aggregating information about subscribers of different mobile operators, while adequately and efficiently protecting the anonymity of the surveyed individuals.

According to an aspect of the present invention, there is provided a method for obtaining statistical demographic information of a sample of people present in a monitored area during a period of time, the method comprising: using a wireless receiver to intercept messages transmitted by mobile handsets and/or base stations for mobile communications in the monitored area during the period of time; mapping the intercepted messages to corresponding mobile operators on the basis of operator-specific information associated with the messages; and generating estimates of respective numbers of unique subscribers of each of the mobile operators present in the monitored area during the period of time on the basis of the numbers of the intercepted messages.

It is an advantage of the present invention that it provides access to location-specific mobile operator market share estimates, without requiring the identification of individual subscribers, because it only relies on operator-specific information associated with the messages, rather than subscriber-specific information. It is a further advantage of the present invention that it is non-intrusive, and that it can work on the basis of transmissions that are made as a matter of course by any bearer of a mobile telephone that is not switched off.

In an embodiment of the method according to the present invention, the operator-specific information comprises at least one field extracted from the intercepted messages.

It is an advantage of this embodiment that the mobile operator responsible for each individual intercepted message can be determined accurately by low-complexity data processing on unencrypted intercepted information.

In an embodiment of the method according to the present invention, the at least one field comprises at least one of a mobile country code and a mobile network code.

It is an advantage of this embodiment that the mobile operator responsible for each individual intercepted message can be identified unambiguously on the basis of a unique identifier, the mobile network code (MNC), optionally in combination with the mobile country code (MCC). It is a further advantage of this embodiment that for certain types of networks, and certain circumstances, the MNC and MCC can be extracted from messages that are intercepted by a system that is not attached to the mobile network as a user equipment.

In a specific embodiment, the at least one field comprises an Individual Mobile Subscriber Identifier.

The Individual Mobile Subscriber Identifier appears as the "IMSI" field in messages exchanged in digital mobile networks. It is only transmitted in the clear in specific network events, such as (without limitation) at power-up of the user equipment or at the entry of a subscriber into a foreign (roaming) mobile network. It is an advantage of this embodiment that it can be used to count individual subscribers as they request to be attached to the mobile network, for instance at a centralized point of entry of a country (e.g. an airport).

In a specific embodiment, the at least one field comprises a Temporary Mobile Subscriber Identifier.

The Temporary Mobile Subscriber Identifier appears as the "TMSI" field in messages exchanged in digital mobile networks, in particular circuit-switched communication in 2G/3G networks. In the context of packet-switched communication in 2G/3G networks, a P-TMSI field is used. In LTE networks, the Temporary Mobile Subscriber Identifier is designated "M-TMSI". The "M-TMSI" is transmitted as part of the GUTI field along with the network ID (consisting of MCC and MNC).

The TMSI may be used in addition to or as an alternative to the use of the MNC. In order for the TMSI to be used as operator-specific information, a table is required that maps individually assigned TMSI values to mobile operators.

It is an advantage of this embodiment that the TMSI field is anonymized by design; any surveying based on TMSI values is therefore automatically privacy-safe.

In an embodiment of the method according to the present invention, the intercepting comprises cycling the wireless receiver through a plurality of frequency bands used for mobile communication during the period of time, the operator-specific information comprises an indication of which one of the plurality of frequency bands is active at the time of intercepting the message, and the mapping of the intercepted messages to corresponding mobile operators is carried out using a frequency band allocation table.

In another embodiment of the method according to the present invention, the wireless receiver comprises a plurality of subsystems adapted to simultaneously intercept the messages in distinct respective frequency bands, the operator-specific information comprises an indication of which one of the plurality of subsystems is used for intercepting the message, and the mapping of the intercepted messages to corresponding mobile operators is carried out using a frequency band allocation table.

It is an advantage of these embodiments that the amount of data extraction may be kept to a minimum, because the operator can be identified on the basis of a parameter that is independent of the data content of the intercepted messages.

In an embodiment of the method according to the present invention, the wireless receiver is adapted to operate at different ranges, and the method further comprises: operating the wireless receiver at a first range during a first part of the period of time; operating the wireless receiver at a second range during a second part of the period of time; generating the estimates separately for different areas based on whether messages were intercepted during the first part of the period of time or the second part of the period of time.

It is an advantage of this embodiment that the demographic information can be obtained for different geographical areas without physically repositioning the interception system. It is particularly advantageous to deploy this embodiment in vehicles, such as public transportation vehicles. While operating at the reduced range, the demographics of the travelers inside the vehicle would be gathered, and while operating at the extended range, the demographics of the people present outside the vehicle would be gathered.

In an embodiment, the method according to the present invention further comprises: associating selected demographic characteristics with the subscribers of at least one of the mobile operators on the basis of a subscriber information database, and generating an aggregated statistic of the selected demographic characteristics for the sample of people present in the monitored area during the period of time by extrapolating the selected demographic characteristics for the subscribers of the at least one of the mobile operators in accordance with the generated estimates of respective numbers of subscribers of each of the mobile operators.

This embodiment is particularly useful when the method is deployed by one of the mobile operators that is active in the surveyed area, or a party associated with such operator, which has a subscriber information database at its disposal. The operator can associate the messages transmitted by its own subscribers in the monitored area with a demographic profile. It is an advantage of this embodiment of the invention that available information about the subscribers of one mobile operator may be leveraged to draw conclusions about the surveyed population as a whole.

According to an aspect of the present invention, there is provided a computer program product comprising code means adapted to cause a processor to carry out the steps of extracting, mapping, and generating, of any of the embodiments of the method according to the present invention as described above.

According to an aspect of the present invention, there is provided a system for obtaining statistical demographic information of a sample of people present in a monitored area during a period of time, the system comprising: a wireless receiver adapted to intercept messages transmitted by mobile handsets and/or base stations for mobile communications in the monitored area; and a processor configured to control the wireless receiver and process information obtained from the wireless receiver in accordance with any of the embodiments of the method according to the present invention as described above.

According to an aspect of the present invention, there is provided a local mobile coverage spot comprising the system as described above.

According to an aspect of the present invention, there is provided a vehicle comprising the system as described above, wherein the wireless receiver is configured to operate at a first range during a first part of the period of time and to operate at a second range during a second part of the period of time; wherein the processor is configured to generate the estimates separately for different areas based on whether messages were intercepted during the first part of the period of time or the second part of the period of time; and wherein the first range and the second range are selected such that said respective different areas substantially coincide with a first region inside the vehicle and a second region outside of the vehicle.

According to an aspect of the present invention, there is provided an autonomous vehicle comprising the system as described above, the vehicle being configured to move within the monitored area.

According to an aspect of the present invention, there is provided an unmanned aerial vehicle comprising the system as described above, the vehicle being configured to fly over the monitored area.

The technical effects and advantages of embodiments of the system, the local mobile coverage spot, the autonomous vehicle, and the unmanned aerial vehicle according to the present invention correspond, *mutatis mutandis,* to those of the corresponding embodiments of the method according to the present invention.

### Brief Description of the Figures

These and other features and advantages of embodiments of the present invention will now be described in more detail with reference to the accompanying drawings, in which:
- Figure 1 provides a flow chart of an embodiment of the method according to the present invention;
- Figure 2 illustrates the structure of the GUTI field used in LTE mobile networks; and
- Figure 3 provides a block diagram of an embodiment of the system according to the present invention.

### Detailed Description of Embodiments

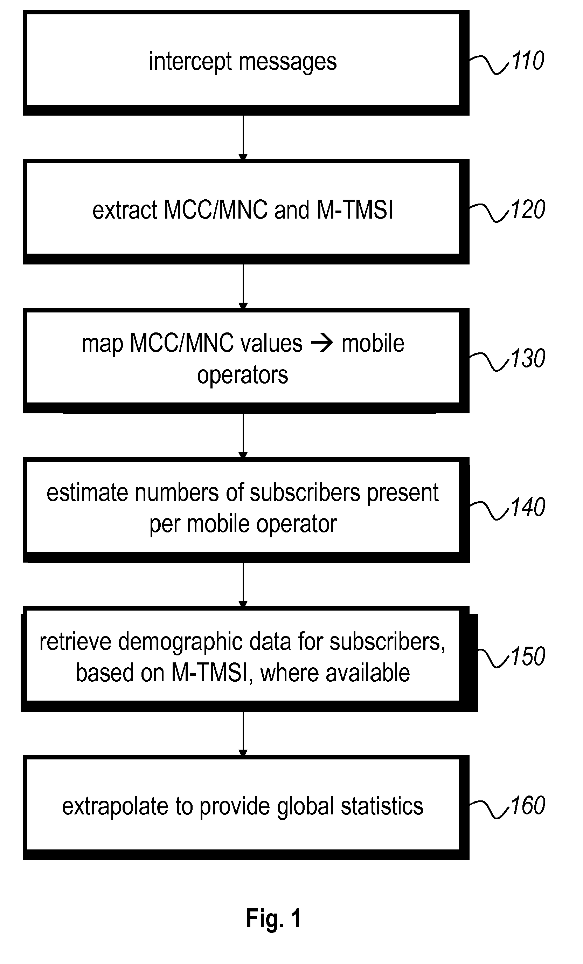

Figure 1 provides a flow chart of a method for obtaining statistical demographic information of a sample of people present in a monitored area during a period of time, according to an exemplary embodiment of the present invention. Without loss of generality, the example is described in the context of an LTE network. The skilled person will appreciate that the same principles can be applied, *mutatis mutandis,* to mobile networks operating according to other mobile communication standards.

As indicated in step **110**, a wireless receiver is used to intercept messages transmitted by mobile handsets and/or base stations for mobile communications in the monitored area during the monitored period of time. The intercepted messages may be messages that are routinely exchanged between mobile user equipment and base stations. This interception can be performed without interfering with the normal operation of the network protocols. Alternatively, the receiver may attach to the mobile network(s), in order to receive applicable scrambling codes, so as to be able to intercept all network-related control messaging.

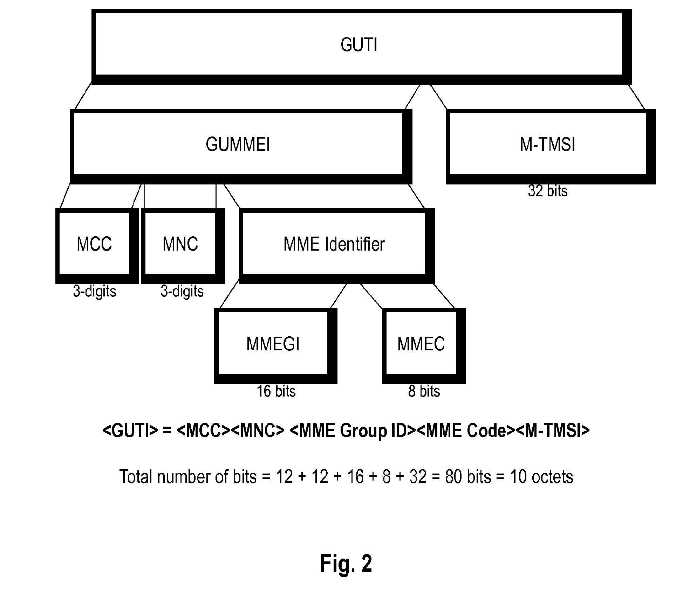

Operator-specific information is extracted **120** from the intercepted messages. If the monitored network is an LTE network, the extracted operator-specific information may comprise a GUTI field, the structure of which is illustrated in Figure 2. The GUTI field includes both operator-specific information, in particular the mobile network code (MNC), and anonymized subscriber-specific information, in particular the M-TMSI.

The intercepted messages are mapped **130** to corresponding mobile operators on the basis of the operator-specific information extracted from the messages. Once this mapping has taken place, it is possible to generate **140** estimates of respective numbers of subscribers of each of the mobile operators present in the monitored area during the period of time on the basis of the numbers of the intercepted messages, which represents the market shares of the respective mobile operators among the surveyed population. Duplicate counts can be avoided by taking into account the M-TMSI information, which allows to unambiguously determine the number of unique subscribers. Although TMSI allocations are regularly renewed, in particular upon a change of geographic area, this is not expected to occur sufficiently frequently to significantly affect the accuracy of TMSI-based subscriber estimates.

If a subscriber information database is available covering the subscribers of at least one of the mobile operators active in the monitored area, selected demographic characteristics can be associated **150** with the subscribers of the at least one mobile operator on the basis of that database. This association **150** can for instance take place by de-anonymizing the TMSI information on the basis of the operator's IMSI/TMSI allocation table, and looking up the known demographic characteristics of the de-anonymized subscribers, which should take place in an environment that provides the necessary guarantees for data protection. Subsequently, an aggregated statistic of the selected demographic characteristics can be generated **160** for the sample of people present in the monitored area during the period of time by extrapolating the selected demographic characteristics for the subscribers of the at least one of the mobile operators in accordance with the generated estimates of respective numbers of subscribers of each of the mobile operators. The demographic characteristics may include an age, a gender, a coded home address zone, and the like. These characteristics are particularly suitable for cross-referencing with demographics databases produced by governmental agencies and commercial entities, which often include age, gender, and coded home address zone as fields in their data sets.

In this way, embodiments of the present invention provide a way to produce real-time demographic statistics of the population present at a given location at a given time. Such information is very useful for urban planners, advertisers, retail chains, and any other parties faced with decisions that could benefit from knowledge of the type of people that may be encountered at a given place at a given time. The present invention thus serves a need that is not served by present sources of demographic information, which is typically geographically linked to the subjects' home address, rather than to their actual location as it varies over the course of the day, week, or year.

The wireless receiver may be adapted to operate at different ranges, in order to separately survey different areas. This area-based monitoring may be achieved by operating the wireless receiver at a first range during a first part of the period of time, operating the wireless receiver at a second range during a second part of the period of time, and generating the estimates separately for different areas based on whether messages were intercepted during the first part of the period of time or the second part of the period of time.

The ability of operating at different ranges may be implemented by including a configurable filter in the receiver, which changes the detection threshold of incoming radio signals. In this way, no interaction with the transmitter is required.

This feature is of particular use when the system is deployed in vehicles, such as public transportation vehicles, because it allows to capture statistics of the travelers inside the vehicle separately from the statistics of the people present outside the vehicle: while operating at the reduced range, the demographics of the travelers inside the vehicle would be gathered, and while operating at the extended range, the demographics of the people present outside the vehicle would be gathered. As the vehicle travels around, different local demographics can be gathered in different places. If this process is carried out with a vehicle (or a fleet of vehicles) that covers a given trajectory at different times of the day, such as a scheduled bus or a tram travelling at moderate speeds through a suburban or urban area, very detailed demographics can be generated by location and by time-of-day. Statistics may be gathered both in the areas through which the vehicle travels, and at its stops (e.g. bus stops, train stations, and the like).

Alternatively or in addition to the use of fields extracted from the intercepted messages, the intercepting step **110** may comprise cycling the wireless receiver through a plurality of frequency bands used for mobile communication during the monitored period of time, and the operator-specific information may comprise an indication of which one of the plurality of frequency bands is active at the time of intercepting the message. As a further alternative, the receiver may comprise a plurality of subsystems adapted to simultaneously intercept the messages in distinct respective frequency bands, and the operator-specific information may comprise an indication of which one of the plurality of subsystems is used for intercepting the message. In these cases, the mapping of the intercepted messages to corresponding mobile operators is carried out using a frequency band allocation table. The subsystems dedicated to the different frequency bands may consist of separate hardware modules, or different programmed processes carried out in parallel by the same hardware platform. The latter solution is particularly suitable for implementation in so-called "software defined radio" platforms.

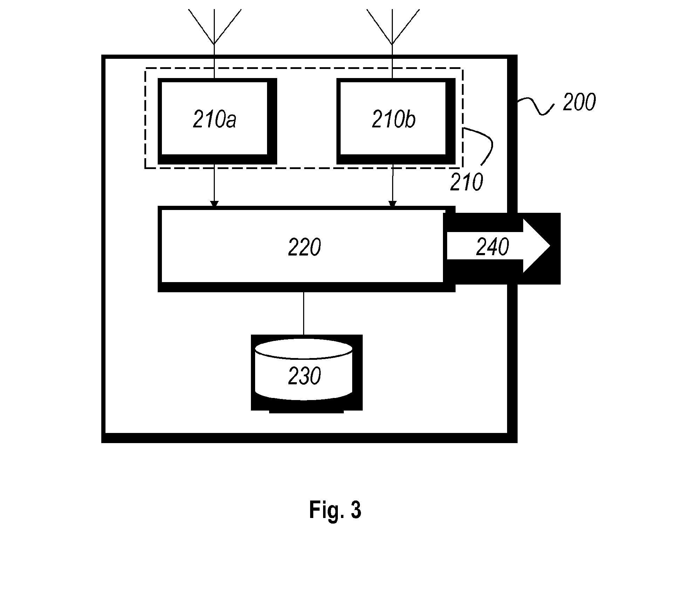

Figure 3 schematically illustrates a system **200** according to an exemplary embodiment of the present invention. The system **200** comprises a wireless receiver **210** adapted to intercept messages transmitted by mobile handsets and/or base stations for mobile communications in the monitored area. Without loss of generality, the wireless receiver **210** is illustrated as comprising two subsystems **210a** and **210b**, configured to operate in different frequency bands, as described above. The two subsystems **210a** and **210b** may have respective SIM cards (or hardware/software combinations that offer the functionality of a SIM card) configured to cooperate with different operators. This allows the subsystems **210a** and **210b** to attach simultaneously to the networks of the respective operators, which enables them to receive the relevant scramble codes and to listen in on all the relevant control channels of these respective networks. Accordingly, information that is transmitted in scrambled form can be intercepted.

The system **200** further comprises a processor **220** configured to control the wireless receiver **210** and process information obtained from the wireless receiver in accordance with the method described above. This processor **220** may for example be a programmable microprocessor, configurable hardware such as an FPGA, dedicated hardware such as an ASIC, or a combination of such components.

In the illustrated case, the processor **220** has access to a subscriber database **230** to perform extrapolation of demographic characteristics across the sampled population. The results of the processing may be exported through any suitable output interface **240**. The subscriber database **230** may be stored on a remote device or network, and the extrapolation step may be performed by a separate processor, e.g. a centralized data center.

The system **200** may be part of a local mobile coverage spot (e.g. a "small cell"), which may be deployed temporarily (e.g., for large events) or permanently (e.g., as part of urban furniture, bus shelters, and the like). Alternatively, the system **200** may be part of an autonomous land or aerial vehicle, which allows for surveying a larger area as the vehicle travels around. The system **200** may also be used in conjunction with a passenger vehicle, in which case operation at different ranges may be used to differentiate between the demographics of the people inside the vehicle and those of the people outside the vehicle, as described above.

The present invention also relates to a computer program product comprising code means adapted to cause a processor, such as processor **220** of the system **200**, to carry out the steps of extracting **120**, mapping **130**, and generating **140**, according to the method of the present invention, and in particular as described above with reference to Figure 1.

While the invention has been described hereinabove with reference to specific embodiments, this has been done to clarify and not to limit the invention, the scope of which is to be determined by means of the attached claims.

## Claims

**1.** A method for obtaining statistical demographic information of a sample of people present in a monitored area during a period of time, the method comprising:
- using a wireless receiver to intercept (110) messages transmitted by mobile handsets and/or base stations for mobile communications in said monitored area during said period of time;
- mapping (130) said intercepted messages to corresponding mobile operators on the basis of operator-specific information associated with said messages; and
- generating (140) estimates of respective numbers of unique subscribers of each of said mobile operators present in said monitored area during said period of time on the basis of the numbers of said intercepted messages.

**2.** The method according to claim 1, wherein said operator-specific information comprises at least one field extracted (120) from said intercepted messages.

**3.** The method according to claim 2, wherein said at least one field comprises at least one of an MCC and an MNC.

**4.** The method according to claim 2 or claim 3, wherein said at least one field comprises a Temporary Mobile Subscriber Identifier.

**5.** The method according to any of claims 1-4, wherein said intercepting (110) comprises cycling said wireless receiver through a plurality of frequency bands used for mobile communication during said period of time, wherein said operator-specific information comprises an indication of which one of said plurality of frequency bands is active at the time of intercepting said message, and wherein said mapping of said intercepted messages to corresponding mobile operators is carried out using a frequency band allocation table.

**6.** The method according to any of claims 1-4, wherein said wireless receiver comprises a plurality of subsystems adapted to simultaneously intercept said messages in distinct respective frequency bands, wherein said operator-specific information comprises an indication of which one of said plurality of subsystems is used for intercepting said message, and wherein said mapping of said intercepted messages to corresponding mobile operators is carried out using a frequency band allocation table.

**8.** The method according to any of the preceding claims, wherein said wireless receiver is adapted to operate at different ranges, the method further comprising:
- operating said wireless receiver at a first range during a first part of said period of time;
- operating said wireless receiver at a second range during a second part of said period of time;
- generating said estimates separately for different areas based on whether messages were intercepted during said first part of said period of time or said second part of said period of time.

**9.** The method according to any of the preceding claims, further comprising:
- associating (150) selected demographic characteristics with said subscribers of at least one of said mobile operators on the basis of a subscriber information database, and
- generating (160) an aggregated statistic of said selected demographic characteristics for said sample of people present in said monitored area during said period of time by extrapolating said selected demographic characteristics for said subscribers of at said least one of said mobile operators in accordance with said generated estimates of respective numbers of subscribers of each of said mobile operators.

**10.** A computer program product comprising code means adapted to cause a processor to carry out the steps of extracting, mapping, and generating, of any of the preceding claims.

**11.** A system (200) for obtaining statistical demographic information of a sample of people present in a monitored area during a period of time, the system comprising:
- a wireless receiver (210) adapted to intercept messages transmitted by mobile handsets and/or base stations for mobile communications in said monitored area; and
- a processor (220) configured to control said wireless receiver and process information obtained from said wireless receiver in accordance with the method of any of claims 1-9.

**12.** A local mobile coverage spot comprising the system according to claim 11.

**13.** A vehicle comprising the system according to claim 11, wherein said wireless receiver (210) is configured to operate at a first range during a first part of said period of time and to operate at a second range during a second part of said period of time; wherein the processor (220) is configured to generate said estimates separately for different areas based on whether messages were intercepted during said first part of said period of time or said second part of said period of time; and wherein said first range and said second range are selected such that said respective different areas substantially coincide with a first region inside of said vehicle and a second region outside of said vehicle.

**14.** An autonomous vehicle comprising the system according to claim 11, said vehicle being configured to move within said monitored area.

**15.** An unmanned aerial vehicle comprising the system according to claim 11, said vehicle being configured to fly over said monitored area.
